# EUROPÄISCHE PATENTSCHRIFT

(11) **EP 0 499 810 B1**
(45) Veröffentlichungstag und Bekanntmachung des Hinweises auf die Patenterteilung: **22.03.1995**
(21) Anmeldenummer: 92100986.6
(22) Anmeldetag: 22.01.1992
(51) Int. Cl.: F16N 25/04, D04B 35/28

(54) **Schmiereinrichtung zur Versorgung mehrerer Schmierstellen, insbesondere einer Strickmaschine, mit Schmiermittel, vorzugsweise Öl**
Lubrication device for supplying a number of lubrification points of lubricant, for preference of oil particularly in a knitting machine
Dispositif de lubrification pour l'alimentation en lubrifiant, de préférence en huile, de plusieurs postes de graissage notamment à un métier à tricoter

(30) Priorität: 16.02.1991 DE 4104793
(43) Veröffentlichungstag der Anmeldung: 26.08.1992
(73) Patentinhaber: MEMMINGER-IRO GMBH, D-72277 Dornstetten (DE)
(72) Erfinder: Braun, Dieter, W-7290 Freudenstadt (DE); Huss, Rolf, W-7298 Lossburg 1 (DE); Lampprecht, Alfred, W-7291 Betzweiler (DE)
(74) Vertreter: Rüger, Rudolf, Dr.-Ing.

(56) Entgegenhaltungen:
- DE-A- 2 936 374
- DE-A- 3 624 982
- DE-C- 383 387
- FR-A- 1 094 985
- US-A- 3 172 578
- US-A- 3 217 835

## Beschreibung

Die Erfindung betrifft eine Schmiereinrichtung zur Versorgung mehrerer Schmierstellen, insbesondere einer Strickmaschine, mit Schmiermittel, vorzugsweise Öl, gemäß dem Oberbegriff des Patentanspruches 1. Eine solche Einrichtung ist aus US-A-3217835 bekannt.

Beispielsweise bei Strickmaschinen bedarf der über Schloßteile erfolgende Nadelantrieb einer dauernden Schmierung, was in gleicher Weise auch für die Nadelführung im Nadelbett oder -zylinder etc. gilt. Gerade bei den modernen schnellaufenden Strickmaschinen kommt einer einwandfreien regelmäßigen Schmierung eine sehr große Bedeutung zu. Diese Maschinen werden deshalb vielfach mit sogenannten Druckölern oder Druckölschmiersystemen ausgerüstet, die von einer zentralen Stelle aus über entsprechende Leitungen Drucköl zu den einzelnen Schmierstellen fördern.

Bei einer aus der FR-A 1 094 985 bekannten Druckölschmiereinrichtung ist zu diesem Zwecke eine stoßweise arbeitende, elektromagnetisch betätigte Kolbenpumpe als Schmiermittelpumpe vorgesehen, die druckseitig über Rückschlagventile enthaltende Leitungen mit mehreren Schmierstellen verbunden ist. Der Kolbenhub der Schmiermittelpumpe kann zur Veränderung der pro Hub geförderten Schmiermittelmenge verändert werden, doch kann bei dieser Einrichtung grundsätzlich nicht gewährleistet werden, daß allen Schmierstellen gleiche Schmiermittelmengen zugeführt werden. Da die Schmiermittelleitungen parallel zueinander an die Druckseite der Schmiermittelpumpe angeschlossen sind, hängt die der einzelnen Schmierstelle zugeführte Schmiermittelmenge u.a. auch von dem Leitungswiderstand zu dieser Schmierstelle ab.

Bei einer anderen, aus der DE-A1-36 24 982 bekannten Druckölschmiereinrichtung, insbesondere für Strickmaschinen, ist eine als elektromagnetisch betätigbare Schwingkolbenpumpe ausgebildete Ölpumpe vorgesehen, die saugseitig mit einem Ölvorratsbehälter verbunden ist und deren Druckleitung in mehrere Zweigdruckleitungen verzweigt ist, von denen jede mittels eines Elektromagnetventiles geöffnet und verschlossen werden kann. Jede dieser Zweigdruckleitungen führt zu einer Ölverteilerkammer, an welche mehrere zu den einzelnen Schmierstellen führende Ölversorgungsleitungen über Rückschlagventile angeschlossen sind. Durch eine einen programmierbaren Mikroprozessor aufweisende Steuereinrichtung können der Antrieb der Schwingkolbenpumpe und ein aufeinanderfolgendes Öffnen der Elektromagnetventile automatisch und willkürlich angesteuert werden. Da an jede Ölverteilerkammer mehrere Ölversorgungsleitungen angeschlossen sind, ist auch hier nicht gewährleistet, daS jede Schmierstelle zwangsläufig die gleiche Schmiermittelmenge pro Kolbenhub der Schwingkolbenpumpe erhält.

Dies ist bei einem aus der DE-A-29 36 374 bekannten Ölschmiersystem, insbesondere bei Strickmaschinen, gewährleistet, bei dem jeder Schmierstelle eine eigene Kolbenpumpe und eine elektronische Schaltanordnung zu deren Antriebssteuerung zugeordnet sind, wobei mehrere Kolbenpumpen mit ihren elektronischen Schaltanordnungen und einem Ölvorratsbehälter zu einer Baueinheit vereinigt sein können. Bei hochsystemigen Strickmaschinen mit einer Vielzahl von Schmierstellen ist der durch die damit vorgegebene größere Anzahl von Einzelkolbenpumpen bedingte Aufwand verhältnismäßig groß.

Bei einer anderen, aus der US-A-3 217 835 bekannten Zentralschmiervorrichtung, von der die Erfindung ausgeht, ist demgegenüber die Anordnung derart getroffen, daß zwischen einer in Form einer Zentrifugalpumpe ausgebildeten einzigen Schmiermittelpumpe und den zu den Schmierstellen führenden Schmiermittelleitungen ein Schmiermittelverteiler angeordnet ist, der eine drehbar gelagerte, mit konstanter Drehzahl angetriebene Ventil- oder Verteilerscheibe aufweist. Die Ventil- oder Verteilerscheibe ist mit Durchgangsbohrungen versehen, die auf Kreisen unterschiedlichen Durchmessers liegen und die bei der Drehbewegung periodisch kurzzeitig eine Verbindung zwischen einem an der Druckseite der Zentrifugalpumpe angeschlossenen Vorratsraum und den einzelnen jeweils angesteuerten Schmiermittelleitungen herstellen. Abgesehen davon, daß die Schmiermittelleitungen nur in einer vorgegebenen, durch ihre räumliche Anordnung bestimmten Reihenfolge aufeinanderfolgend angesteuert werden können, führt die dauernd arbeitende Zentrifugalpumpe zu Druckschwankungen in dem Vorratsraum und damit zu einer unregelmäßigen Schmiermittelversorgung. Diese Druckschwankungen werden zwar durch ein an den Vorratsraum angeschlossenen Überdruckventil vermindert, doch können sie grundsätzlich nicht ganz ausgeschaltet werden. Grundsätzlich Gleiches gilt auch für eine im Prinzip ähnlich aufgebaute Zentralschmiervorrichtung, die aus der DE-C-383 387 bekannt ist.

Aufgabe der Erfindung ist es deshalb, eine Schmiereinrichtung zur Versorgung mehrerer Schmierstellen, insbesondere einer Strickmaschine, zu schaffen, die sich bei einfachem Aufbau dadurch auszeichnet, daß den einzelnen Schmiersteilen zwangsläufig genau vorbestimmte Schmiermittelmengen pro Schmiertakt zugeleitet werden.

Zur Lösung dieser Aufgabe weist die eingangs genannte Schmiereinrichtung erfindungsgemäß die Merkmale des kennzeichnenden Teils des Patentanspruches 1 auf.

Über das bewegliche Verteilerelement des Schmiermittelverteilers wird bei jedem Schmiervorgang eine Leitungsverbindung zwischen der Druckseite der pro Hub eine genau dosierte Schmiermittelmenge abgebenden Schmiermittelpumpe und der angesteuerten Schmierstelle hergestellt. Damit ist sichergestellt, daß jede Schmierstelle zwangsläufig genau die von der Schmiermittelpumpe pro Schmiertakt gelieferte Schmiermittelmenge erhält, und zwar unabhängig davon, ob die zum den einzelnen Schmierstellen führenden Leitungen unterschiedliche Leitungswiderstände aufweisen, ob Temperaturänderungen des Schmiermittels auftreten oder andere, die Schmiermittelverteilung sonst beeinträchtigende Einflüsse vorhanden sind. Trotzdem arbeitet die Einrichtung aber mit lediglich einer einzigen Schmiermittelpumpe für die Versorgung aller Schmierstellen.

In einer Ausführungsform ist die Anordnung derart getroffen, daß das Verteilerelement eine abgedichtet in eine entsprechende rotationssymmetrische Lagerstelle des Verteilergehäuses eingesetzte Verteilerscheibe aufweist, die einen zu ihrer zylindrischen Umfangsfläche hin sich öffnenden ringförmigen Schmiermittelzufuhrkanal trägt, in den ein in der zylindrischen Umfangswand des Verteilergehäuses mündender Schmiermittelzuleitungskanal führt und von dem ein am Umfang des Verteilerelementes angeordneter Verteilerkanal abgeht, welchem in der zylindrischen Umfangswand des Verteilergehäuses mündende, zu den Schmiermittelleitungen führende Kanäle in dem Verteilergehäuse zugeordnet sind.

Einfache konstruktive Verhältnisse ergeben sich auch, wenn das Verteilerelement eine abgedichtet in eine entsprechend rotationssymmetrische Lagerstelle des Verteilergehäuses eingesetzte Verteilerscheibe aufweist, die wenigstens einen zentrisch auf einer Stirnseite und am Umfang der Verteilerscheibe mündenden Verteilerkanal enthält, dem am Boden der Lagerstelle und an deren Umfangswand mündende, zu deren Schmiermitteleingang bzw. zu den Schmiermittelausgängen führende Kanäle in dem Verteilergehäuse zugeordnet sind. Dabei kann der Schmiermittelverteiler ein in Bereiche der Verteilerscheibe angeordnetes und zu deren Lagerspalt führendes Überdruckventil enthalten, das gleichzeitig zur Betriebsüberwachung dient. Auch ist es vorteilhaft, wenn die Verteilerscheibe mit Federkraft axial gegen den Boden der Lagerstelle angedrückt ist.

Der Schmiermittelverteiler ist zweckmäßigerweise in dem Schmiermittelvorratsbehälter angeordnet, in dem er in der darin enthaltenen Schmiermittelmenge zumindest teilweise untergetaucht sein kann, so daß etwaige unvermeidlich auftretende Leckagen keine besonderen zusätzlichen Maßnahmen erforderlich machen. Eine einfache konstruktive Lösung ergibt sich, wenn der Schmiermittelvorratsbehälter eine zur Aufnahme der Schmiermittelmenge bestimmte Kammer enthält, die nach außen zu verschlossen ist und in die die Schmiermittelpumpe und/oder der Schmiermittelverteiler eingesetzt ist. Die Antriebsmittel der Schmiermittelpumpe und/oder die Antriebsquelle des Schmiermittelverteilers können dann auf eine Wand der Kammer außen aufgesetzt sein, so daß sie mit dem Schmiermittel selbst nicht in Berührung kommen.

Die Schmiereinrichtung kann im übrigen Anschlußmittel für eine zusätzliche Flüssigkeitsquelle aufweisen, die an der Schmiermittelpumpe und/oder im Bereiche des Eingangs des Schmiermittelverteilers mündet und durch die bspw. zu Spülzwecken eine Flüssigkeitsmenge zumindest durch den Schmiermittelverteiler und die Anschlußeinrichtungen für die Schmiermittelleitungen unter Druck durchleitbar ist. Praktisch kann auf diese Weise z.B. eine Zahnradpumpe angeschlossen werden, die unabhängig von der eigentlichen Schmiermittelpumpe die ganze Einrichtung mit Öl durchspült oder die Schmierstellen mit Öl beflutet. Auch kann jeder der Schmiermittelleitungseinrichtungen ein eigener Schmiermitteldurchgangswächter zugeordnet sein, um jederzeit eine einwandfreie Funktionskontrolle der ganzen Einrichtungen zu ermöglichen. Diese Kontrolle wird dadurch erleichtert, wenn die Schmiermitteleinrichtung eine optische Anzeigeeinrichtung für den Funktionszustand der einzelnen Schmiermittelleitungen aufweist, die durch die Durchgangswächter angesteuert ist.

Das erläuterte drehbewegliche Verteilerelement kann seine Drehbewegung von einer an sich beliebig ausgebildeten zweckentsprechenden Antriebsquelle erhalten. Diese muß nur in der Lage sein, den Verteilerkanal des Verteilerelementes auf den jeweils angesteuerten Schmiermittelausgang des Verteilergehäuses genau auszurichten. Durch die elektronische Steuereinrichtung ist sie mit der Antriebseinrichtung der in der Regel als Kolbenpumpe ausgebildeten Schmiermittelpumpe synchronisiert, dergestalt, daß die von der Pumpe geförderte Schmiermittelmenge der jeweils programmgemäß ausgewählten und angesteuerten Schmiermittelleitung zugeführt wird, nachdem über den Verteilerkanal des Verteilerelementes die zugehörige Leitungsverbindung zwischen der Druckseite der Pumpe und dem zugehörigen Schmiermittelauslaß des Verteilergehäuses hergestellt wurde. Eine verhältnismäßig einfache, genaue Ansteuerung des Verteilerelementes durch die programmierbare Steuereinheit ergibt sich, wenn die Antriebsquelle des Verteilerelementes dessen Drehbewegung in vorgegebenen Winkelinkrementen ausführend, bspw. als Schrittmotor, ausgeführt ist.

Zur Erleichterung der Schmiereinrichtung an der Strickmaschine selbst können schließlich deren Anschlußeinrichtungen jeweils einen Steckanschluß für eine Schmiermittelleitung aufweisen, der mit einer Sicherheitseinrichtung für die in der Regel als Schlauch ausgebildete Schmiermittelleitung versehen ist. Diese Sicherheitseinrichtung kann mit Vorteil ein in Halterungsmittel einsteckbares, die schlauchförmige Schmiermittelleitung teilweise umgreifendes Gabelstück aufweisen.

In der Zeichnung ist ein Ausführungsbeispiel des Gegenstandes der Erfindung dargestellt. Es zeigen:
- Fig. 1: eine Schmiereinrichtung gemäß der Erfindung, in Form eines sogenannten Druckölers für eine Strickmaschine, im axialen Schnitt, in einer Seitenansicht und in schematischer Darstellung,
- Fig. 2: den Drucköler nach Fig. 1, in einer Draufsicht auf die Bedienungsseite,
- Fig. 3: den Schmiermittelverteiler des Druckölers nach Fig. 1, geschnitten längs der Linie II-II der Fig. 1, in einer Draufsicht und teilweise aufgeschnitten, sowie in einem anderen Maßstab,
- Fig. 4: einen Schmiermittelschlauchsteckanschluß des Druckölers nach Fig. 1 oder 2, in schematischer perspektivischer Darstellung,
- Fig. 5: die Anordnung nach Fig. 4, geschnitten längs der Linie V-V der Fig. 4, in einer Seitenansicht und in einem anderen Maßstab,
- Fig. 6: den Sicherheitsschieber der Anordnung nach Fig.4, in einer Draufsicht, und
- Fig. 7: den Schmiermittelverteiler nach Fig. 3, in einer abgewandelten Ausführungsform, in einer entsprechenden Schnittdarstellung und in Ausschnitt.

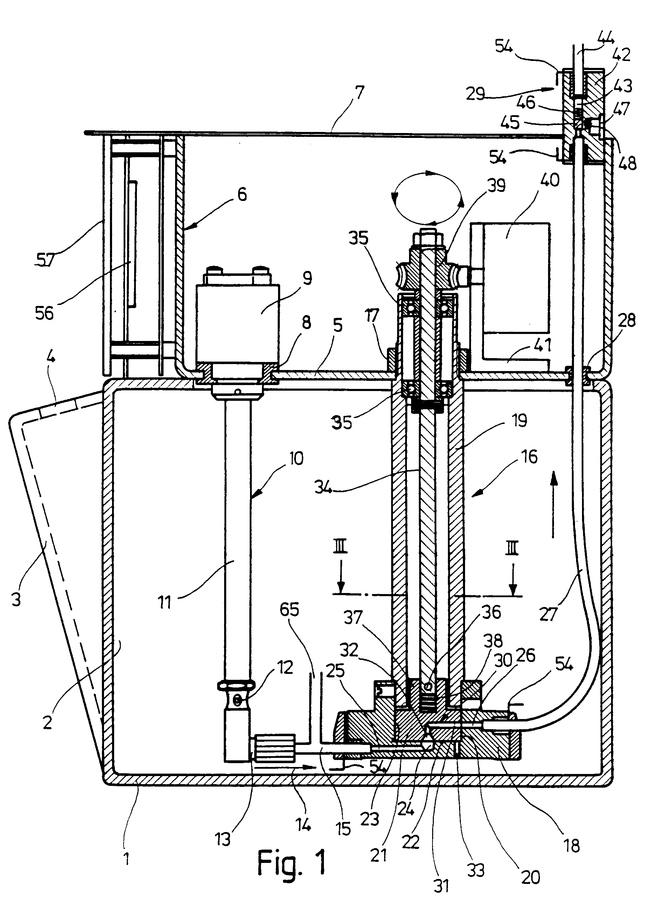

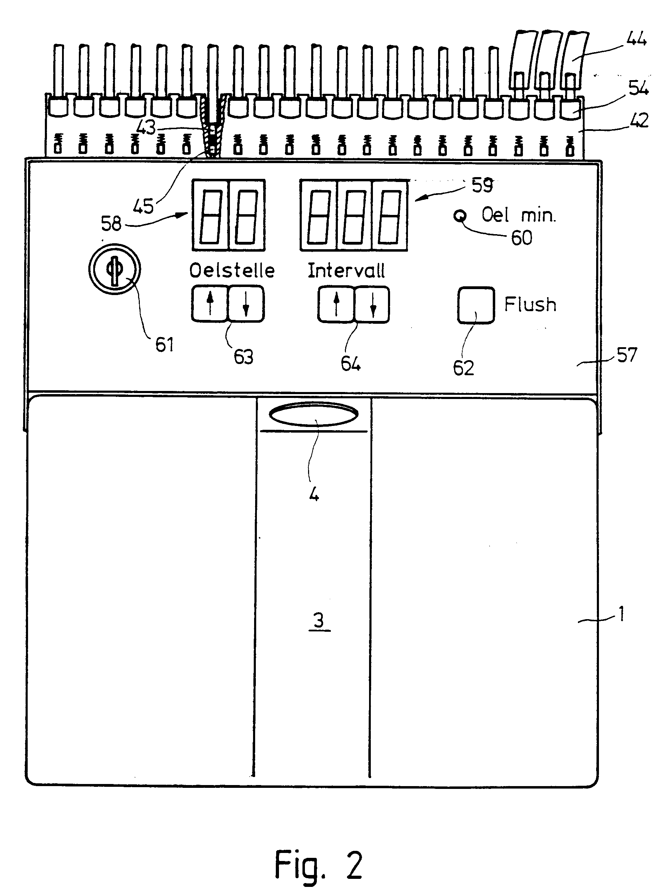

Die in den Fig. 1,2 dargestellte Drucköl-Schmiereinrichtung, kurz Drucköler genannt, weist ein aus Kunststoff bestehendes, im Querschnitt etwa rechteckiges Gehäuse 1 auf, das einen Schmiermittelvorratsbehälter bildet und zu diesem Zwecke eine Kammer 2 umschließt, die zur Aufnahme einer Ölvorratsmenge bestimmt ist und in die eine in einem seitlich angeformten Füllstutzen 3 angeordnete, durch einen Stopfen verschließbare Ölfüllöffnung 4 mündet. Die Kammer 2 ist nach oben zu durch einen abgedichtet aufgesetzten Zwischenboden 5 verschlossen, der die Bodenwand eines wannenartigen Teilgehäuses 6 ist, das oben durch eine abnehmbare Deckwand 7 verschlossen ist.

In eine entsprechende Öffnung des Zwischenbodens 5 ist über eine Dichtungsmanschette 8 abgedichtet, das Gehäuse 9 des elektromagnetischen Antriebs einer mit 10 bezeichneten Kolbenpumpe eingesetzt, die als Schmiermittelpumpe dient und pro Kolbenhub eine genau dosierte Ölmenge fördert. Die Kolbenpumpe 10 weist ein Pumprohr 11 auf, das endseitig mit einer Ansaugöffnung 12 versehen ist und an das ein Druckstutzen 13 angeschlossen ist, durch den aus der Kammer 2 angesaugtes Öl in der durch einen Pfeil 14 angedeuteten Förderrichtung stoßweise gefördert wird.

An dem Druckstutzen 13 der Kolbenpumpe 10 ist über eine Leitung 15 ein Schmiermittelverteiler 16 angeschlossen, der in eine entsprechende Öffnung des Zwischenbodens 5 eingesetzt und an dem Zwischenboden 5 mittels eines aufgeschraubten Gewinderinges 17 gehaltert ist.

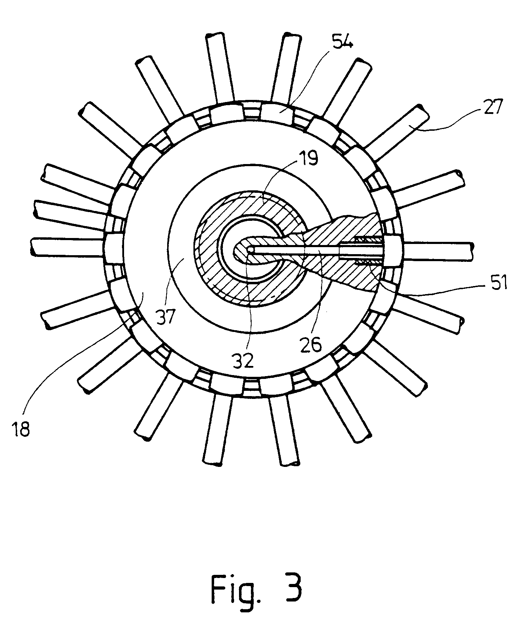

Der Schmiermittelverteiler 16 weist ein Verteilergehäuse 18 auf, das im wesentlichen zylindrisch ausgebildet und in seinen Einzelheiten in Fig. 3 veranschaulicht ist und das mittels eines koaxialen Distanzrohres 19 in bereits beschriebener Weise an dem Zwischenboden 5 befestigt ist. In dem Verteilergehäuse 18 ist eine koaxiale zylindrische Ausnehmung 20 angeordnet, die die Lagerstelle für ein scheibenförmiges zylindrisches Verteilerelement 21 bildet, das drehbeweglich in dem Verteilergehäuse 18 gelagert ist. Die Bohrung 20 ist mit einer ebenen Bodenwand 22 versehen, die rechtwinklig zu der zylindrischen Umfangswand 23 angeordnet ist und in der mittig eine einen Öleinlaß bildende Ölzufuhrbohrung 24 mündet, die über einen in dem Verteilergehäuse 18 ausgebildeten Ölzuleitungskanal 25 mit der Leitung 15 verbunden ist.

In der zylindrischen Umfangswandung 23 der Bohrung 20 münden in gleichen Winkelabständen radiale Ölkanäle 26, von denen jeder einen Schmiermittelauslaß bildet und an einen Verbindungsschlauch 27 angeschlossen ist, der mittels eines elastischen Dichtringes 28 abgedichtet durch eine entsprechende Bohrung der Zwischenwand 5 hindurch zu einer Schmiermittelleitungsanschlußeinrichtung 29 geführt ist.

Das Verteilerelement 21 enthält einen im wesentlichen L-förmigen Verteilerkanal 30, dessen horizontaler Schenkel 31 in der zylindrischen Umfangsfläche auf der Höhe der Radialkanäle 26 mündet und dessen vertikaler Schenkel koaxial verlaufend auf die Ölzufuhrbohrung 24 ausgerichtet ist. Mit seiner zylindrischen Umfangsfläche ist das Verteilerelement 21 mit genauer enger Passung in die Bohrung 20 des Verteilergehäuses 18 eingepaßt, wobei die Passungspaarung der zylindrischen Wandung der Bohrung 20 und der zylindrischen Umfangsfläche des Verteilerelementes 21 derart gewählt ist, daß das Verteilerelement 21 um die Vertikalachse frei drehbar bleibt, während andererseits der zylindrische Lagerspalt unter normalen Druckbedingungen kein Öl austreten läßt. In dem Verteilergehäuse ist außerdem eine im Bereiche des Bodens 22 der Bohrung 20 mündende Überdruckbohrung 33 vorgesehen, die eine Art Überdruckventil bildet und eine allgemeine Funktionskontrolle erlaubt, wie dies im einzelnen noch erläutert werden wird.

Mit dem drehbeweglichen Verteilerelement 21 ist eine koaxiale Welle 34 drehfest verbunden, die durch das Distanzrohr 19 verläuft und in diesem mittels zweier Kugellager 35 drehbar, aber axial unverschieblich gelagert ist. Zur Verbindung der Welle 34 mit dem Verteilerelement 21 dient ein Mitnehmerstift 36, der in einen axialen randoffenen Mitnehmerschlitz in einer zugeordneten Buchse 37 des Verteilerelementes 21 eingreift. Zwischen dem Verteilerelement 21 und der Welle 34 ist eine Druckfeder 38 angeordnet, die das Verteilerelement 21 mit entsprechender Vorspannung gegen die Bodenwand 22 der Bohrung 20 des ortsfesten Verteilergehäuses 18 andrückt.

Auf die Welle 34 ist antriebsseitig ein Ritzel 39 eines Zahnradgetriebes aufgesetzt, das mit einem Stellmotor 40 verbunden ist, der mittels eines Winkelstückes 41 an dem Zwischenboden 5 befestigt ist und der die Antriebsquelle für den Schmiermittelverteiler 16 bildet. Der Stellmotor 40 ist bspw. ein elektrischer Schrittmotor.

Die Schmiermittelleitungsanschlußeinrichtung 29 weist ein an der Rückwand des Teilgehäuses 6 und über diese oben vorragendes leistenförmiges Anschlußgehäuse 42 auf (vergl. Fig. 1,2), das für jede zu versorgende Schmierstelle einen Durchgangskanal 43 enthält, an dem einenends eine Verbindungsleitung 27 und andernends eine abgehende, zu der jeweiligen Schmierstelle führende Schmiermittelleitung 44 abgedichtet angeschlossen ist. In jedem Durchgangskanal 43 ist ein Sichtkörper 45 mit einseitig zugeordneter Druckfeder 46 angeordnet, dessen Bewegung von außen her durch ein Sichtfenster 47 beobachtet werden kann, das den Blick auf den Sichtkörper 45 freigibt. Im Bereiche jedes Sichtfensters 47 ist außerdem ein elektrischer Stellungsgeber 48, bspw. in Form eines Hall-Generators angeordnet, der gemeinsam mit dem Sichtkörper 45 einen elektronischen Schmiermitteldurchgangswächter für die jeweilige Schmiermittelleitung 44 bildet und damit eine elektronische Funktionskontrolle erlaubt. Bei verstopftem oder beeinträchtigtem Öldurchlaß wird das von dem Geber 48 abgegebene Signal der Ölimpulsrückmeldung unterbrochen, womit die aufgetretene Störung auf der Bedienseite des Gehäuses 1 optisch angezeigt und gleichzeitig ein Abstellsignal für die Strickmaschine abgegeben wird.

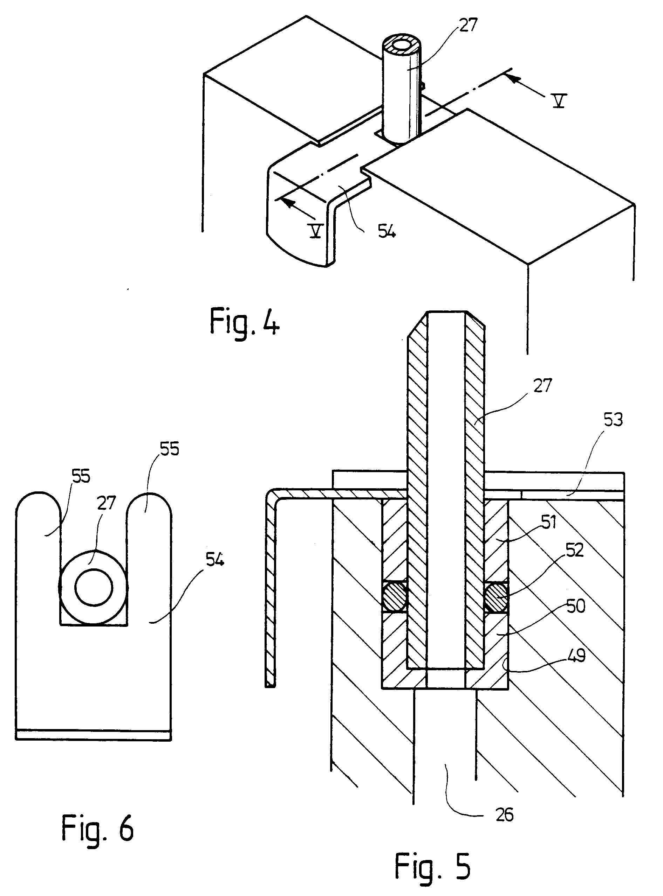

Die Verbindungsschläuche 27 und die ebenfalls als Schläuche ausgebildeten Schmiermittelleitungen 44 sind jeweils mittels Steckanschlüssen, d.h. schraubfrei, mit dem Verteilergehäuse 18 bzw. dem Anschlußgehäuse 42 abgedichtet verbunden. Die Ausbildung dieser Steckanschlüsse geht insbesondere aus den Fig. 4 bis 6 hervor:
Jeder Steckanschluß weist eine in eine entsprechende zylindrische Bohrung 49 des Verteilergehäuses 18 bzw. des Anschlußgehäuses 42 eingefügte Anschlußbuchse 5o auf, die mit einer ebenfalls in die Bohrung 49 abgedichtet eingesetzten zylindrischen Hülse 51 einen Ringspalt begrenzt, in den ein elastischer O-Ring 52 eingelegt ist, der in der aus Fig. 5 ersichtlichen Weise das eingesteckte Ende eines eingesteckten Schlauches, bspw. eines Verbindungsschlauches 27, gegen die Wandung der Bohrung 49 abdichtet.

Beidseitig jeder Bohrung 49 sind in dem Verteilergehäuse 18 bzw. dem Anschlußgehäuse 42 jeweils zwei parallele Quernuten 53 ausgebildet, die zusammen eine Längsführung für einen Sicherungsschieber in Gestalt eines gabelförmigen Winkelbleches 54 bilden, das im eingeschobenen Zustand den eingesteckten Kunststoffschlauch 27 mit seinen beiden Schenkeln 55 beidseitig umfaßt, wobei der Kunststoffschlauch 27 zwischen den Schenkeln 55 leicht zusammengepreßt und damit an seinem Außendurchmesser sicher gehalten ist.

Die elektromagnetische Antriebseinrichtung 9 der Kolbenpumpe 10 und der Stellmotor 40 des Schmiermittelverteilers 16 sind durch eine elektronische programmierbare Steuereinrichtung angesteuert, deren Platinen bspw. bei 56 (Fig. 1) angedeutet sind. An einer Frontplatte 57 des Gehäuses 1 sind eine Anzeigeeinrichtung 58 zur Identifizierung der jeweiligen Ölstelle, eine Anzeigeeinrichtung 59 zur Angabe des jeweiligen Schmierintervalls, ein Ölmindeststandsanzeiger 60,ein Hauptschalter 61 und eine optische Anzeige 62 für das Befluten der Schmierstellen ("Flush") angeordnet.

Die jeweils angezeigte Ölstelle kann durch zwei Druckknöpfe 63 angesteuert werden, während zur Einstellung der ebenfalls angezeigten Schmierintervallzeit zwei Druckknöpfe 64 dienen.

Die beschriebene Druckölschmiereinrichtung arbeitet wie folgt:
Nach Erreichen einer vorher eingestellten und durch die Anzeigeeinrichtung 59 angezeigten Intervallzeit für eine ausgewählte, an der Anzeigeeinrichtung 58 angezeigte Ölstelle steuert die Steuereinrichtung 56 den Stellmotor 40 derart an, daß dieser das Verteilerelement 21 mit seinem Verteilerkanal 30 auf den der jeweiligen Ölstelle zugeordneten Radialkanal 26 des Verteilergehäuses 18 ausrichtet und das Verteilerelement 21 in der erreichten Winkelstellung positioniert. Damit ist eine unmittelbare Leitungsverbindung zwischen der Druckseite der Kolbenpumpe 10 und der angesteuerten Ölstelle hergestellt. Die Steuereinrichtung 56 veranlaßt nunmehr die entsprechende Betätigung der Kolbenpumpe 10, durch die eine genau dosierte Ölmenge unbeeinflußt von Temperatur und Viskosität des Öls über die Leitungsverbindung zu der angesteuerten Ölstelle gefördert wird.

Nach Abschluß des Schmiervorgangs an dieser Ölstelle dreht programmgesteuert der Stellmotor 40 das Verteilerelement 21 weiter in eine Winkelstellung, in der in beschriebener Weise wiederum eine Leitungsverbindung zwischen der Druckseite der Kolbenpumpe 10 und der neuen Ölstelle hergestellt ist, worauf die Kolbenpumpe 10 wieder betätigt wird. Dieser Vorgang setzt sich fort bis alle Ölstellen mit der vorbestimmten Ölmenge versehen sind.

Dabei brauchen die den einzelnen Ölstellen zugeordneten Radialkanäle 26 in dem Verteilergehäuse 18 nicht in einer ihrer räumlichen Anordnung am Umfang der Bohrung 20 entsprechenden Reihenfolge angesteuert zu werden, sondern die Auswahl der jeweils zu versorgenden Ölstelle erfolgt programmgemäß entsprechend den jeweiligen Betriebsbedingungen und Erfordernissen. Die Zeitintervalle für die Schmierölzufuhr zu jeder Ölstelle können individuell gewählt und mittels der Druckknöpfe 64 eingestellt werden, wobei das jeweils eingestellte Intervall durch die Anzeigeeinrichtung 59 angezeigt wird.

Grundsätzlich ist es auch möglich, die der Ölstelle zugeführte Ölmenge den jeweiligen Bedürfnissen entsprechend individuell zu wählen. Nach in bereits beschriebener Weise hergestellter Verbindung zwischen der Druckseite der Kolbenpumpe 10 und der jeweiligen Ölstelle kann durch entsprechende Dauer der Betätigung der Kolbenpumpe 10 in Abhängigkeit von der jeweiligen Programmierung der Steuereinrichtung 56 die jeweils erforderliche Ölmenge gefördert werden.

Anstelle der geschilderten schrittweisen Verdrehung des Verteilerelementes 21 zur intervallweisen Ansteuerung einzelner Ölstellen kann der Stellmotor 40 auch derart gesteuert werden, daß er dem Verteilerelement 21 eine konstante Drehbewegung (z.B. 1/3 Umdrehung pro Sekunde) erteilt). Die elektromagentische Antriebseinrichtung 9 der Kolbenpumpe 10 ist mit dem Stellmotor 40 über die Steuereinrichtung 56 synchronisiert, so daß die Kolbenpumpe 10 immer dann die jeweils vorbestimmte Ölmenge fördert, wenn der Verteilerkanal 30 einen Radialkanal 26 in dem Verteilergehäuse 18 zumindest teilweise überdeckt. Bei bspw. 18 Radialkanälen 26 und damit 18 Ölstellen ergibt sich eine Pumpfrequenz von 6 Hüben pro Sekunde.

Der Schmiermittelverteiler 16 ist mit seinem Verteilergehäuse 18 in der den Ölvorrat enthaltenden Kammer 2 an tiefstmöglicher Stelle angeordnet, so daß er in dem Ölvorrat untergetaucht ist. Etwa auftretende geringfügige Leckagen bedürfen deshalb keiner besonderen Vorkehrung. Beim Auftreten eines den Nennbetriebsdruck übersteigenden Öldrucks in dem Schmiermittelverteiler 16, der bspw. daher rühren kann, daß die Leitungsverbindung zu der jeweils angesteuerten Ölstelle verstopft ist, wird das Verteilerelement 21 gegen die Wirkung der Druckfeder 38 von dem Boden 22 der Bohrung 20 des Verteilergehäuses 18 abgehoben. Damit wird die sonst verschlossene Überdruckbohrung 33 freigegeben, so daß das von der Kolbenpumpe 10 geförderte Öl über diesen Weg gefahrlos abströmen kann.

Schließlich ist die die Druckseite der Kolbenpumpe 10 mit dem Schmiermittelverteiler 16 verbindende Leitung 15 mit einem Leitungsabzweig 65 versehen, der zum Anschluß einer nicht weiter dargestellten Zusatzpumpe, bspw. einer Zahnradpumpe, vorgesehen ist. Auf diesem Wege können der Schmiermittelverteiler 16 und die angeschlossenen Leitungen, einschließlich der Schmiermittelleitungsanschlußeinrichtung 29, im Bedarfsfall gespült werden, wie es auch möglich ist, die Ölstellen mit Öl zu befluten ("Flush"-Betrieb).

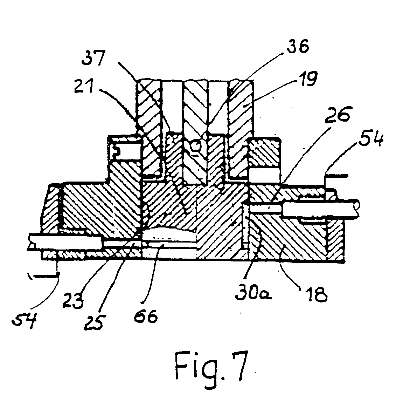

Die in Fig. 7 im Ausschnitt dargestellte abgewandelte Ausführungsform des Schmiermittelverteilers 16 entspricht weitgehend der anhand der Fig. 3,4 bereits beschriebenen Ausführungsform. Gleiche Teile sind deshalb mit gleichen Bezugszeichen versehen und nicht nochmals erläutert.

Abweichend von der Ausführungsform nach Fig. 3,4 weist das scheibenförmige zylindrische Verteilerelement 21 in Fig. 7 keinen im wesentlichen L-förmigen Verteilerkanal auf, der mit einer mittig in dem Verteilergehäuse 18 angeordneten Ölzufuhrbohrung fluchtet. Das Verteilerelement 21 ist vielmehr mit einem sich zu seiner zylindrischen Umfangsfläche hin öffnenden ringförmigen Ölzufuhrkanal 66 ausgebildet, der durch die zylindrische Umfangswand 23 des Verteilergehäuses 18 verschlossen ist und in den der Ölzuleitungskanal 25 mündet. An einer Stelle des Umfangs des Verteilerelementes 21 ist ein achsparallel ausgerichteter,kurzer, nutenförmiger Verteilerkanal 30a angeordnet, dessen Breite etwa dem Durchmesser eines radialen Ölkanals 26 entspricht und der von dem Ölzufuhrkanal 66 bis zur Höhe der Oberseite der Mündungen der radialen Ölkanäle 26 reicht.

Die das Verteilerelement 21 aufnehmende Bohrung 20 ist in diesem Fall als zylindrische Durchgangsbohrung in dem Verteilergehäuse 18 ausgebildet; die ebene Bodenwand 22 der Fig. 3 entfällt. Entsprechend ist die Welle 34 mit dem Verteilerelement 21 starr verbunden. Die Druckfeder 38 der Fig. 3 ist weggelassen,und der Mitnehmerstift 36 verläuft durch eine entsprechende Querbohrung der Buchse 37 des Verteilerelementes 21.

Diese Ausführungsform zeichnet sich durch eine vereinfachte Herstellungsmöglichkeit aus, weil sie, wie erwähnt, mit einer einfachen paßgenauen Durchgangsbohrung 20 das Auslangen findet.

Die Schmiereinrichtung wurde im Vorstehenden in der Ausführung als Drucköler für Strickmaschinen beschrieben. Sie kann grundsätzlich naturgemäß auch zur Schmiermittelversorgung bei anderen Maschinen und Einrichtungen Verwendung finden, bei denen es darauf ankommt, von einer zentralen Stelle aus eine Mehrzahl von Schmierstellen mit genau dosierten Schmiermittelmengen in vorgegebenen Zeitintervallen zu versorgen. Auch ist es nicht unbedingt erforderlich, daß das Schmiermittel Öl ist; auch andere Schmiermittelzubereitungen können mit dieser Schmiereinrichtung zugeteilt werden. Die Schmiermittelleitungen 44 selbst führen zu dem an sich bekannten Spritzdüsen an den einzelnen Ölstellen; sie können genauso gut aber auch zur Versorgung von anderen Schmier- oder Öleinrichtungen dienen, die ihrerseits Mittel zum Aufbringen der zugeführten Schmiermittel auf die zu schmierenden Teile enthalten.

## Patentansprüche

1. Schmiereinrichtung zur Versorgung mehrerer Schmierstellen, insbesondere einer Strickmaschine, mit Schmiermittel, vorzugsweise Öl, mit einer Schmiermittelpumpe (10), mit einem Schmiermittelvorratsbehäler (1), mit dem die Schmiermittelpumpe saugseitig verbunden ist, mit Anschlußeinrichtungen für zu den einzelnen Schmierstellen führende Schmiermittelleitungen (44), die von der Druckseite der Schmiermittelpumpe aus wahlweise mit Schmiermittel versorgbar sind, sowie mit einem ein drehbewegliches, mit Stellmitteln verbundenes Verteilerelement (21) enthaltenden Schmiermittelverteiler (16), der mit einem Schmiermitteleingang (25) an die Druckseite der einzigen Schmiermittelpumpe angeschlossen und der ausgangsseitig mit den einzelnen Schmiermittelanschlußeinrichtungen verbunden ist, wobei das rotationssymmetrische Verteilerelement zur stellungsabhängigen Herstellung einer Verbindung zwischen dem Schmiermitteleingang und einem jeweils ausgewählten Schmiermittelausgang (26) eingerichtet ist, der einer bestimmten Schmiermittelleitung der Anschlußeinrichtung zugeordnet ist, dadurch gekennzeichnet, daS die Schmiermittelpumpe (10) stoßweise eine genau dosierte Schmiermittelmenge abgebend ausgebildet ist, daß die Stellmittel des Verteilerelementes (21) eine eigene Antriebsquelle (40) aufweisen, die von einer elektrischen Steuereinrichtung (56) ansteuerbar ist, und daß die Schmiermittelpumpe und die Antriebsquelle (40) durch die Steuereinrichtung (56) derart synchronisiert sind, daß eine von der Schmierpumpe dosierte Schmiermittelmenge über die von dem Verteilerelement hergestellte Leitungsverbindung zu der jeweils angesteuerten Schmierstelle gefördert wird.

2. Schmiereinrichtung nach Anspruch 1, dadurch gekennzeichnet, daß das Verteilerelement (21) eine abgedichtet in eine entsprechende rotationssymmetrische Lagerstelle (20) des Verteilergehäuses (18) eingesetzte Verteilerscheibe aufweist, die einen zu ihrer zylindrischen Umfangsfläche hin sich öffnenden ringförmigen Schmiermittelzufuhrkanal (66) trägt, in den ein in der zylindrischen Umfangswand (23) des Verteilergehäuses (18) mündender Schmiermittelzuleitungskanal (25) führt und von dem ein am Umfang des Verteilerelementes (21) angeordneter Verteilerkanal (30a) abgeht, welchem in der zylindrischen Umfangswand (23) des Verteilergehäuses (18) mündende, zu den Schmiermittelleitungen (44) führende Kanäle (26) in dem Verteilergehäuse zugeordnet sind.

3. Schmiereinrichtung nach Anspruch 1, dadurch gekennzeichnet, daß das Verteilerelement (21) eine abgedichtet in eine entsprechende rotationssymmetrische Lagerstelle (20) des Verteilergehäuses (18) eingesetzte Verteilerscheibe aufweist, die wenigstens einen zentrisch auf einer Stirnseite und am Umfang der Verteilerscheibe mündenden Verteilerkanal (30) enthält, dem am Boden (22) der Lagerstelle (20) und an deren Umfangswand mündende, zu dem Schmiermitteleingang (24) bzw. zu den Schmiermittelleitungen (44) führende Kanäle (25) in dem Verteilergehäuse (18) zugeordnet sind.

4. Schmiereinrichtung nach Anspruch 2 oder 3, dadurch gekennzeichnet, daß der Schmiermittelverteiler (16) ein im Bereiche der Verteilerscheibe (21) angeordnetes und zu deren Lagerspalt führendes Überdruckventil (33) aufweist.

5. Schmiereinrichtung nach Anspruch 4, dadurch gekennzeichnet, daß die Verteilerscheibe (21) mit Federkraft axial gegen den Boden (22) der Lagerstelle (20) angedrückt ist und von dem Boden eine normalerweise verschlossene Überdruckbohrung (33) des Überdruckventils abgeht.

6. Schmiereinrichtung nach einem der vorhergehenden Ansprüche, dadurch gekennzeichnet, daß der Schmiermittelverteiler (16) in dem Schmiermittelvorratsbehälter (1) angeordnet ist.

7. Schmiereinrichtung nach Anspruch 6, dadurch gekennzeichnet, daß der Schmiermittelverteiler (16) in der in dem Vorratsbehälter (1) enthaltenen Schmiermittelmenge zumindest teilweise untergetaucht angeordnet ist.

8. Schmiereinrichtung nach Anspruch 6 oder 7, dadurch gekennzeichnet, daß der Schmiermittelvorratsbehälter (1) eine zur Aufnahme einer Schmiermittelmenge bestimmte Kammer (2) enthält, die nach außen zu verschlossen ist und in die die Schmiermittelpumpe (10) und/oder der Schmiermittelverteiler (16) eingesetzt ist.

9. Schmiereinrichtung nach Anspruch 8, dadurch gekennzeichnet, daS die Antriebsmittel (9) der Schmiermittelpumpe (10) und/oder die Antriebsquelle (40) des Schmiermittelverteilers (16) auf eine Wand (5) der Kammer (2) außen aufgesetzt sind.

10. Schmiereinrichtung nach einem der vorhergehenden Ansprüche, dadurch gekennzeichnet, daß sie Anschlußmittel (65) für eine zusätzliche Flüssigkeitsquelle aufweist, die an der Schmiermittelpumpe (10) und/oder im Bereiche des Eingangs (25) des Schmiermittelverteilers (16) mündet und durch die eine Flüssigkeitsmenge zumindest durch den Schmiermittelverteiler (16) und die Anschlußeinrichtungen (29) für die Schmiermittelleitungen (44) unter Druck durchleitbar ist.

11. Schmiereinrichtung nach einem der vorhergehenden Ansprüche, dadurch gekennzeichnet, daß jeder der Schmiermittelleitungsanschlußeinrichtungen ein eigener Schmiermitteldurchgangswächter (45, 46, 48) zugeordnet ist.

12. Schmiereinrichtung nach Anspruch 11, dadurch gekennzeichnet, daß sie eine optische Anzeigeeinrichtung (47) für den Funktionszustand der Schmiermittelleitungen (44) aufweist. die gegebenenfalls durch den Durchgangswächter angesteuert ist.

13. Schmiereinrichtung nach einem der vorhergehenden Ansprüche, dadurch gekennzeichnet, daß die Anschlußeinrichtungen jeweils einen Steckanschluß für eine Schmiermittelleitung (15, 27, 44) aufweisen, der mit einer Sicherheitseinrichtung (54) für die Schmiermittelleitung versehen ist.

14. Schmiereinrichtung nach Anspruch 13, dadurch gekennzeichnet, daß die Sicherheitseinrichtung ein in Halterungsmittel (53) einsteckbares, die schlauchförmige Schmiermittelleitung teilweise umgreifendes Gabelstück (54) aufweist.

15. Schmiereinrichtung nach einem der vorhergehenden Ansprüche, dadurch gekennzeichnet, daß das Verteilerelement (21) des Schmiermittelverteilers (16) durch seine Antriebsquelle (40) zumindest zeitweise in eine kontinuierliche Drehbewegung versetzbar ist und daß die Antriebseinrichtung (9) der Schmiermittelpumpe (10) mit dieser Drehbewegung synchronisiert ist, derart, daß die Schmiermittelpumpe (10) jeweils bei zu einer Schmierstelle hergestellter Leitungsverbindung ihre Schmiermittelmenge fördert.

16. Schmiereinrichtung nach einem der Ansprüche 2 bis 14, dadurch gekennzeichnet, daß die Antriebsquelle (40) des Schmiermittelverteilers (16) eine in vorgegebenen Winkelinkrementen stattfindende Drehbewegung des Verteilerelementes (21) ausführend ausgebildet ist.

## Claims

1. Lubricating device for supplying lubricant, in particular oil, to several lubrication points, in particular in a knitting machine, with a lubricating pump (10), a lubricant supply container (1), to which the lubricating pump is connected on the suction side, with connecting devices for the lubricant pipes (44), which lead to the individual lubrication points and which may be supplied selectively with lubricant from the pressure side of the lubricating pump, and with a lubricant distributor (16), which includes a rotatable distributor element (21) connected to control means and which is attached to a lubricant inlet (25) at the pressure side of the single lubricating pump and connected on the output side to the individual lubricant connecting devices, wherein the rotation-symmetrical distributor element is arranged between the lubricant inlet and a respective selected lubricant outlet (26) to create a connection dependent on position, said lubricant outlet being allocated to a specific lubricant pipe of the connecting device, characterised in that the lubricating pump (10) is constructed to discharge a precisely dosed quantity of lubricant intermittently; that the control means of the distributor element (21) have their own drive means (40), which may be actuated by an electric control device (56); and that the lubricating pump and the drive means (40) are synchronised by the control device (56) in such a way that a quantity of lubricant dosed by the lubricating pump is delivered via the pipe connection created by the distributor element to the respective selected lubrication point.

2. Lubricating device according to Claim 1, characterised in that the distributor element (21) has a distributor plug inserted and sealed into a corresponding rotation-symmetrical bearing point (20) of the distributor housing (18), said distributor plug having a ring-shaped lubricant supply channel (66) opening towards its cylindrical circumference, which has a lubricant supply channel (25) discharging into the cylindrical circumferential wall (23) of the distributor housing (18) leading into it and a distributor channel (30a) arranged on the circumference of the distributor element (21) leading out of it, and to said distributor channel channels (26) in the distributor housing are allocated, which discharge into the cylindrical circumferential wall (23) of the distributor housing (18) and lead to the lubricant pipes (44).

3. Lubricating device according to Claim 1, characterised in that the distributor element (21) has a distributor plug, which is inserted and sealed into a corresponding rotation-symmetrical bearing point (20) of the distributor housing (18) and which comprises at least one distributor channel (30), which discharges centrally onto a face side and on the circumference of the distributor plug, and to which channels (25) in the distributor housing (18) are allocated, which discharge on the bottom (22) of the bearing point (20) and on its circumferential wall and lead to the lubricant inlet (24) or to the lubricant supply pipes (44).

4. Lubricating device according to Claim 2 or 3, characterised in that lubricant distributor (16) has a pressure relief valve (33) arranged in the region of the distributor plug (21) and leading to its bearing gap.

5. Lubricating device according to Claim 4, characterised in that the distributor plug (21) is pressed axially with spring force against the bottom (22) of the bearing point (20) and a normally closed excess pressure hole (33) in the pressure relief valve extends down from the bottom.

6. Lubricating device according to one of the preceding claims, characterised in that the lubricant distributor (16) is arranged in the lubricant supply container (1).

7. Lubricating device according to Claim 6, characterised in that the lubricant distributor (16) is arranged so that it is at least partially submerged in the quantity of lubricant contained in the supply container (1).

8. Lubricating device according to Claim 6 or 7, characterised in that the lubricant supply container (1) contains a chamber (2), which is designed for receiving a quantity of lubricant and is closed to the outside and into which the lubricating pump (10) and/or the lubricant distributor (16) is inserted.

9. Lubricating device according to Claim 8, characterised in that the drive means (9) of the lubricating pump (10) and/or the drive means (40) of the lubricant distributor (16) are attached to the outside of a wall (5) of the chamber (2).

10. Lubricating device according to one of the preceding claims, characterised in that it has connection means (65) for an additional source of liquid, which discharge at the lubricating pump (10) and/or in the region of the inlet (25) of the lubricant distributor (16), and through which a quantity of liquid may be conducted under pressure at least via the lubricant distributor (16) and the connecting devices (29) for the lubricant pipes (44).

11. Lubricating device according to one of the preceding claims, characterised in that each of the lubricant pipe connecting devices has its own lubricant flow monitor (45, 46, 48).

12. Lubricating device according to Claim 11, characterised in that it has a visual display unit (47) to display the operational state of the lubricant pipes (44) which is optionally actuated via the flow monitors.

13. Lubricating device according to one of the preceding claims, characterised in that the connecting devices each have a plug connection for a lubricant pipe (15, 27, 44) which is provided with a safety means (54) for the lubricant pipe.

14. Lubricating device according to Claim 13, characterised in that the safety means has a forked part (54), which may be inserted into holding means (53) and partially embraces the hose-like lubricant pipe.

15. Lubricating device according to one of the preceding claims, characterised in that the distributor element (21) of the lubricant distributor (16) may at least at intervals be set in continuous rotational movement by its drive means (40); and that the drive means (9) of the lubricating pump (10) is synchronised with this rotational movement in such a way that the lubricating pump (10) delivers its quantity of lubricant when a respective pipe connection has been created to the lubrication point.

16. Lubricating device according to one of Claims 2 to 14, characterised in that the drive means (40) of the lubricant distributor (16) is designed to move the distributor element (21) in rotation in predetermined angular increments.

## Revendications

1. Dispositif de lubrification pour l'alimentation en lubrifiant, de préférence en huile, de plusieurs points de lubrification notamment d'une machine de bonneterie, comportant une pompe à lubrifiant (10), un réservoir (1) de stockage de lubrifiant auquel la pompe à lubrifiant est connectée côté aspiration, des dispositifs de raccordement pour des conduites de lubrification (44) menant aux différents points de lubrification qui peuvent être alimentées en lubrifiant de manière sélective à partir du refoulement de la pompe et un distributeur (16) de lubrifiant qui contient un organe distributeur (21) lié à des moyens de commande et qui, par une entrée de lubrifiant (25) est connecté au côté refoulement de la pompe à lubrifiant unique et, côté sortie est connecté aux différents dispositifs de raccordement, l'organe distributeur qui est symétrique de rotation étant agencé de manière à réaliser une communication en fonction de sa position entre l'entrée de lubrifiant et une sortie de lubrifiant (26) sélectionnée associée à une conduite de lubrifiant donnée du dispositif de raccordement, caractérisé par le fait que la pompe à lubrifiant (10) est agencée de manière à délivrer de manière pulsatoire une quantité de lubrifiant dosée avec précision, par le fait que les moyens de commande de l'organe distributeur (21) présentent une source d'entraînement (40) propre qui peut être commandée par un dispositif de commande électrique (56) et par le fait que la pompe à lubrifiant et la source d'entraînement (40) sont synchronisées par le dispositif de commande (56) de manière telle qu'une quantité de lubrifiant dosée par la pompe à lubrifiant soit envoyée par l'intermédiaire de la liaison établie par l'organe distributeur vers le point de lubrification concerné.

2. Dispositif de lubrification selon la revendication 1, caractérisé par le fait que l'organe distributeur (21) comporte un disque de distributeur qui est monté avec étanchéité dans un logement (20) symétrique de rotation adapté du corps (18) du distributeur et comporte un canal (66) annulaire d'amenée de lubrifiant qui est ouvert en direction de la surface extérieure cylindrique du disque, dans lequel arrive un canal (25) d'alimentation en lubrifiant débouchant dans la paroi périphérique (23) cylindrique du corps (18) de distributeur et duquel part un canal de distribution (30a) qui est disposé à la périphérie de l'organe distributeur (21) et auquel sont associés, dans le corps du distributeur, des canaux (26) qui débouchent dans la paroi périphérique cylindrique (23) du corps (18) de distributeur et mènent aux conduites de lubrification (44).

3. Dispositif de lubrification selon la revendication 1, caractérisé par le fait que l'organe distributeur (21) comporte un disque de distributeur qui est monté avec étanchéité dans un logement (20) symétrique de rotation adapté du corps (18) du distributeur et comporte au moins un canal de distribution (30) qui est disposé au centre sur une face frontale, débouche à la périphérie dudit disque de distributeur et auquel sont associés dans le corps (18) du distributeur des canaux (25) qui débouchent dans le fond (22) du logement (20) et dans la paroi périphérique de celui-ci et mènent à l'entrée de lubrifiant (24) ou aux conduites de lubrification (44).

4. Dispositif de lubrification selon la revendication 2 ou la revendication 3, caractérisé par le fait que le distributeur (16) de lubrifiant comporte une soupape de décharge (33) qui est disposée dans la région du disque de distributeur (21) et mène à l'espace entre disque et corps de distributeur.

5. Dispositif de lubrification selon la revendication 4, caractérisé par le fait que le disque de distributeur (21) est pressé axialement par une force élastique contre le fond (22) du logement (20) et qu'un orifice de décharge (33) normalement fermé de la soupape de décharge s'étend à partir du fond.

6. Dispositif de lubrification selon l'une des revendications précédentes, caractérisé par le fait que le distributeur (16) de lubrifiant est disposé dans le réservoir (1) de stockage de lubrifiant.

7. Dispositif de lubrification selon la revendication 6, caractérisé par le fait que le distributeur (16) de lubrifiant est au moins partiellement immergé dans le volume de lubrifiant contenu dans le réservoir (1) de stockage de lubrifiant.

8. Dispositif de lubrification selon la revendication 6 ou la revendication 7, caractérisé par le fait que le réservoir (1) de stockage de lubrifiant comporte une chambre (2) qui est destiné à recevoir une quantité prédéterminée de lubrifiant, est fermée vis-à-vis de l'extérieur et dans laquelle la pompe à lubrifiant (10) et/ou le distributeur (16) de lubrifiant est/sont montés.

9. Dispositif de lubrification selon la revendication 8, caractérisé par le fait que les moyens d'entraînement (9) de la pompe à lubrifiant (10) et/ou la source d'entraînement (40) du distributeur (16) de lubrifiant sont disposés à l'extérieur, sur une paroi (5) de la chambre (2).

10. Dispositif de lubrification selon l'une des revendications précédentes, caractérisé par le fait qu'il comporte des moyens de raccordement (65) pour une source de fluide supplémentaire qui débouche dans la pompe à lubrifiant (10) et/ou dans la région de l'entrée (25) du distributeur (16) de lubrifiant et par l'intermédiaire de laquelle on peut faire circuler une quantité de fluide sous pression à travers le distributeur (16) et à travers les dispositifs de raccordement (29) pour les conduites de lubrification (44).

11. Dispositif de lubrification selon l'une des revendications précédentes, caractérisé par le fait qu'un dispositif (45, 46, 48) de surveillance du passage du lubrifiant est associé à chacun des dispositifs de raccordement des conduites de lubrification.

12. Dispositif de lubrification selon la revendication 11, caractérisé par le fait qu'il comporte un dispositif (47) optique d'indication de l'état de fonctionnement des conduites de lubrification (44) qui, le cas échéant, est commandé par le dispositif de surveillance de passage.

13. Dispositif de lubrification selon l'une des revendications précédentes, caractérisé par le fait que les dispositifs de raccordement comportent chacun un raccord enfichable pour une conduite de lubrification (15, 27, 44), lequel raccord est pourvu d'un dispositif de sécurité (54) pour ladite conduite de lubrification.

14. Dispositif de lubrification selon la revendication 13, caractérisé par le fait que le dispositif de sécurité comprend une pièce (54) en forme de fourchette qui peut être introduite dans des moyens de retenue (53) et entoure partiellement la conduite de lubrification flexible.

15. Dispositif de lubrification selon l'une des revendications précédentes, caractérisé par le fait que l'organe distributeur (21) du distributeur (16) de lubrifiant peut au moins temporairement être entraîné de manière continue par sa source d'entraînement (40) et par le fait que le dispositif d'entraînement (9) de la pompe à lubrifiant (10) est synchronisé avec ce mouvement de rotation de manière telle que, lorsque la liaison avec la conduite est établie, ladite pompe (10) envoie sa quantité de lubrifiant.

16. Dispositif de lubrification selon l'une des revendications 2 à 14, caractérisé par le fait que la source d'entraînement (40) du distributeur (16) de lubrifiant est agencée de manière à provoquer une rotation de l'organe distributeur (21) par incréments d'angle prédéterminés.
